Europäisches Patentamt

European Patent Office

Office européen des brevets

(19)

(11) **EP 0 451 047 B1**

(12) **FASCICULE DE BREVET EUROPEEN**

(45) Date de publication et mention
de la délivrance du brevet:
**29.10.1997 Bulletin 1997/44**

(51) Int Cl.6: **G02B 6/12**, G02F 1/133

(21) Numéro de dépôt: **91400893.3**

(22) Date de dépôt: **02.04.1991**

(54) **Composant optique intégré protégé contre l'environnement et son procédé de fabrication**

Vor Umwelteinflüssen geschützte integrierte optische Komponente und Verfahren zu ihrer Herstellung

Environmentally protected integrated optical component and method of manufacturing the same

(84) Etats contractants désignés:
**BE DE GB IT NL SE**

(30) Priorité: **03.04.1990 FR 9004255**

(43) Date de publication de la demande:
**09.10.1991 Bulletin 1991/41**

(73) Titulaire: **COMMISSARIAT A L'ENERGIE ATOMIQUE**
**75015 Paris (FR)**

(72) Inventeurs:
• **Fournier, Adeline**
  **F-38220 Vizille (FR)**
• **Gidon, Pierre**
  **F-38130 Echirolles (FR)**
• **Valette, Serge**
  **F-38100 Grenoble (FR)**

(74) Mandataire: **Poulin, Gérard et al**
**Société BREVATOME**
**25, rue de Ponthieu**
**75008 Paris (FR)**

(56) Documents cités:
**EP-A- 0 207 725**

• **EP-A- 0 196 948**
• **EP-A- 0 286 528**
• **PATENT ABSTRACTS OF JAPAN, vol. 11, no. 303 (P-622)[2750], 3 octobre 1987; & JP-A-62 94 823**

## Description

L'invention a pour objet un composant optique actif ou passif en optique intégrée, ainsi que son procédé de fabrication. Elle trouve une application notamment dans le domaine de traitement des signaux radars en temps réel, par exemple dans des corrélateurs, analyseurs de spectre ou interféromètres, dans le domaine des télécommunications par voie optique, par exemple pour le multiplexage ou le démultiplexage de signaux lumineux et dans le domaine des capteurs à fibres optiques.

Le composant optique intégré de l'invention peut être un miroir, une lame séparatrice, un réseau de diffraction, une lentille de focalisation, un microguide ainsi que tous les types de composants optiques intégrés mettant en oeuvre des réseaux de diffraction, comme par exemple des coupleurs optiques ; ces coupleurs optiques peuvent en particulier être utilisés dans des séparateurs de polarisation et des convertisseurs de polarisation.

De manière générale, il est toujours très difficile de réaliser des composants en optique intégrée dans des guides de lumière, dans la mesure où les variations d'indice effectif qui affectent les signaux lumineux guidés sont assez faibles. Ceci oblige à travailler dans des conditions géométriques souvent particulières ou bien de définir de nouveaux types de composants adaptés aux problèmes particuliers à résoudre.

Dans un système optique intégré complet, on utilise très souvent une lame séparatrice. Un exemple de réalisation d'une lame séparatrice en optique intégrée telle que décrite dans le document FR-A-2 613 826 déposé au nom du demandeur est représenté sur la figure 1. La partie a de la figure 1 est une vue en coupe de la lame séparatrice et la partie b une vue de dessus.

Le guide de lumière dans lequel est formée la lame séparatrice est constitué (partie a) d'un substrat 2 en silicium, surmonté d'une couche tampon ou inférieure 3 en silice non dopée puis d'une couche guide 4 en $Si_3N_4$ d'indice de réfraction supérieur à celui de la couche inférieure 3. Une couche supérieure 5 en silice non dopée, d'indice de réfraction inférieur à celui de la couche guide 4, complète la structure du guide.

La lame séparatrice 6 consiste en une tranchée pratiquée dans la couche supérieure 5, dont la profondeur est, dans cette représentation, égale à l'épaisseur de la couche supérieure 5.

Dans cette réalisation, on peut définir deux structures guides différentes : une structure (1) $Si/SiO_2/Si_3N_4/SiO_2$ d'indice effectif N1eff et une structure (2) $Si/SiO_2/Si_3N_4$/air d'indice effectif N2eff. L'indice effectif d'une structure dépend de l'indice de réfraction des couches la constituant et de leur épaisseur.

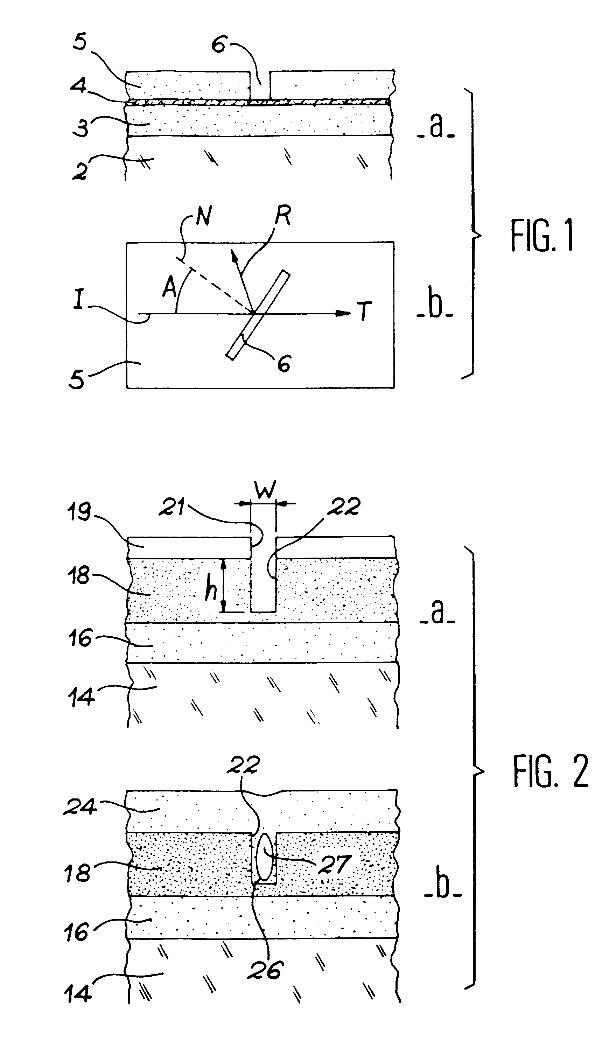

Sur la partie b de la figure 1, I représente le faisceau de lumière incident, R représente le faisceau de lumière réfléchi, T représente le faisceau de lumière transmis par la lame 6 et N représente la normale à la lame 6. Ces faisceaux sont véhiculés par la couche guide 4.

On ne peut avoir un coefficient de réflexion R important à l'interface des structures (1) et (2) que si l'angle d'incidence A est voisin ou supérieur à l'angle limite Al.

L'angle limite de réflexion totale Al, tel qu'on peut le calculer dans un modèle d'onde plane, est défini par l'équation (1) :

$$(1) \qquad Al = Arcsin\ N2eff/N1eff$$

Plus l'écart d'indice effectif N1eff-N2eff est élevé, plus l'angle Al s'écarte de n/2.

Dans le mode de réalisation de la figure 1 et pour une longueur d'onde du faisceau incident de 800nm et une épaisseur de la couche guide 4 de 160nm, on obtient N1eff voisin de 1,69 et N2eff voisin de 1,65 et par conséquent Al vaut environ 77°.

En remplaçant l'air par du $MgF_2$ qui présente un in-dice de réfraction de 1,38, inférieur à celui de la silice non dopée qui est de 1,45 environ, on obtient un indice effectif N2eff de 1,68 et par conséquent un angle Al de 84° environ. Ce remplacement de l'air par du $MgF_2$ est enseigné par le document mentionné ci-dessus.

L'utilisation de l'air comme couche supérieure du guide de lumière, d'indice de réfraction 1, permet d'obtenir des écarts d'indice effectif élevés et donc de travailler à des angles d'incidence faible.

L'intérêt de travailler avec des angles limites Al les plus petits possible permet une meilleure séparation des faisceaux transmis et réfléchis, par augmentation de l'angle les séparant.

Malheureusement, une telle lame séparatrice utilisant comme couche supérieure de l'air n'est pas protégée de toute pollution extérieure.

Ces problèmes existent aussi pour d'autres structures guides, c'est-à-dire pour d'autres matériaux que ceux donnés ci-dessus, ainsi que pour des tranchées 6 se prolongeant dans la couche guide 4 voire même dans la couche tampon 3.

Ainsi, ces inconvénients existent aussi pour des réseaux de diffraction qui ne sont constitués que d'une succession de lames séparatrices équidistantes les unes des autres, composants très utilisés en optique intégrée, ainsi que pour les miroirs et les lentilles de focalisation.

Par ailleurs, on ne connaît pas, actuellement, beaucoup de matériaux solides présentant un indice de réfraction inférieur à celui de la silice qui permettraient de remplacer l'air dans la structure guidante, ce qui limite considérablement la fabrication des composants optiques intégrés dans ce matériau.

Actuellement, on ne connaît que le $MgF_2$ pour rem-placer l'air dans les structures guides (1) et (2). Malheureusement, la mise en oeuvre de ce matériau est peu commode car il se craquelle dès que son épaisseur dépasse 200-300nm et les différences d'indice effectif qu'il induit sont généralement trop faibles.

Par ailleurs, il n'est pas possible de réaliser des structures monomodes compatibles d'un côté avec les diodes laser et de l'autre côté avec des fibres optiques. En effet, les diodes laser utilisent des structures guidantes possédant des variations d'indice de réfraction très élevées entre le coeur et le milieu environnant alors que les fibres optiques ont des variations d'indice de réfraction faibles (de l'ordre de $4.10^{-3}$ à $10^{-2}$). En conséquence, le confinement de la lumière est très différent ; 1 micromètre ou moins (dans le sens de la jonction) pour la diode laser et 5 à 9 micromètres pour les fibres optiques.

Aussi, pour connecter ces éléments à un seul et même guide d'onde, il faudrait que ce dernier soit à la fois un guide à faible variation d'indice et un guide à forte variation d'indice suivant le type d'élément à connecter. Or, ceci n'est pas possible avec une structure de guide unique, mais uniquement avec deux structures guide couplées.

Malheureusement, il est très difficile d'échanger de l'énergie lumineuse entre deux guides de lumière à profils de mode guidé très différents et les rendements obtenus sont très faibles. En effet, ce transfert d'énergie peut être réalisé, de façon connue, par un couplage bout à bout dans lequel l'intégrale de superposition entre les amplitudes lumineuses des deux modes guidés est très faible (donc rendement faible) ou par un couplage co-directif, mais alors les constantes de propagation (vitesse de phase en particulier) des modes guidés dans les deux guides de lumière sont très différentes, ce qui ne permet pas le couplage.

Dans un couplage co-directif, les deux structures guides sont empilées.

Il est connu d'améliorer le couplage co-directif de deux structures guides en utilisant une structure périodique du type réseau qui assure l'adaptation des vitesses de propagation entre les modes à coupler. Un tel couplage est en particulier décrit dans le document FR-A-2 579 044 déposé au nom du demandeur. L'inconvénient de cette méthode est qu'elle conduit à une sensibilité en longueur d'onde qui peut être gênante lors de son utilisation dans un système optique réel.

L'invention a justement pour but un composant optique intégré ainsi que son procédé de fabrication permettant de remédier aux différents inconvénients donnés ci-dessus. En particulier, ce composant optique est protégé contre l'environnement tout en assurant des variations d'indice effectif élevées.

En outre, lorsque ce composant est un réseau, il peut être utilisé pour un couplage co-directif efficace de deux guides optiques empilés ayant des profils de mode guidé très différents.

Par ailleurs, le composant de l'invention peut être réalisé en un plus grand nombre de matériaux que ceux de l'art antérieur et sa fabrication est beaucoup moins critique.

On connaît, par Patent Abstracts of Japan, vol.11, no. 303, octobre 1987, et JP-A-6294823, un modulateur optique de type guide d'onde comprenant un intervalle rempli d'un cristal liquide recouvert d'une electrode.

On connaît aussi, par EP-A-0207725, un commutateur optique comprenant un guide d'onde pourvu d'un canal rempli d'un matériau de commutation également recouvert d'une electrode.

De façon plus précise, l'invention a pour objet un composant optique intégré, conformément à la revendication 1.

L'isolation des composants du milieu extérieur permet la réalisation d'autres étapes technologiques indépendamment de l'existence de ces composants.

Le gaz enfermé dans la cavité permet une modification locale de l'indice effectif du guide de lumière plus élevée que celle obtenue dans les composants de l'art antérieur. En outre, cette modification locale de l'indice effectif est fixée uniquement par le gaz de la cavité et ne subit donc pas les perturbations polluantes dues à l'environnement.

L'utilisation d'un gaz d'indice de réfraction, inférieur à celui de la couche le renfermant, a l'avantage de ne pas modifier le nombre de modes guidés de la structure initiale du guide de Lumière. Ce qui signifie qu'une structure monomode reste monomode en regard de la cavité.

Par ailleurs, du fait que la différence d'indice créée par la cavité est négative, la lumière n'existe que sous une forme évanescente dans des composants du type réseau ou coupleur. Ceci assure une bonne reproductibilité des performances recherchées par suite d'une diminution de la sensibilité à l'épaisseur de la cavité par exemple.

Comme gaz, on peut utiliser un gaz neutre ou inerte comme par exemple l'argon, le néon, l'hélium, l'azote, ou bien utiliser de l'air ou encore du vide. Ces gaz ont tous un indice de réfraction inférieur à celui de la silice, égal ou voisin de 1. Les gaz ont en outre l'avantage de ne pas provoquer de réactions chimiques à long terme avec les matériaux de la structure intégrée et donc de ne pas modifier les propriétés physiques recherchées pour la structure.

De façon avantageuse, on utilise l'air comme matériau de remplissage. Son indice de réfraction égal à 1 permet de l'associer à un grand nombre de matériaux et d'assurer une forte différence d'indice effectif.

Il est aussi possible d'utiliser, comme matériau de remplissage, des gaz ou des vapeurs présentant des raies d'absorption particulières que l'on peut par exemple saturer optiquement, (l'excitation des niveaux d'énergie correspondant à ces raies d'absorption), tels que l'hélium, le néon, des vapeurs de sodium ou de rhubidium.

Les valeurs des indices de réfraction mentionnées tout au long de la description correspondent à une longueur d'onde de 800 nm.

Le composant optique de l'invention peut être un miroir. Dans ce cas, la cavité s'étend avantageusement de la couche supérieure à la couche inférieure du guide de lumière.

Le composant optique de l'invention peut aussi être une lame séparatrice ou une lentille de focalisation.

Les dimensions et la forme de la cavité définissent les propriétés optiques du composant. Pour une lentille, comme pour une lame séparatrice, la cavité est logée dans au moins une des couches de la structure guide.

Le composant optique peut aussi être un microguide destiné au confinement latéral de la lumière.

Lorsque le composant optique est un réseau de diffraction, ce dernier comporte plusieurs cavités disposées de préférence parallèlement les unes aux autres et remplies chacune d'un matériau d'indice différent ; ces cavités constituent les traits du réseau et sont formées dans l'une quelconque des couches de la structure guide.

Ce dernier type de composant peut avantageusement être utilisé pour coupler deux guides de lumière superposés, avec un rendement de transfert d'énergie tout à fait satisfaisant.

La force de couplage d'un réseau est proportionnelle à la différence d'indice de réfraction entre le gaz notamment contenu dans les cavités et le matériau dans lequel sont formées ces cavités. De plus, plus cette différence d'indice est grande, plus le nombre de traits peut être faible.

Un réseau de diffraction à fort coefficient de couplage conforme à l'invention permet le couplage de deux guides de lumière superposés à profil de mode guidé très différent, un premier guide consistant en une première couche supérieure et une première couche inférieure, disposées de part et d'autre d'une première couche guide d'indice de réfraction supérieur à celui des premières couches supérieure et inférieure et un second guide consistant en une seconde couche supérieure et une seconde couche inférieure disposées de part et d'autre d'une seconde couche guide d'indice de réfraction supérieur à celui des secondes couches inférieure et supérieure, la première couche supérieure et la seconde couche inférieure constituant une seule et même couche dite de couplage et le réseau étant logé dans la couche de couplage.

Un réseau de diffraction conforme à l'invention permet aussi le couplage de deux guides à profil de mode guidé très différent comportant une première, une seconde, une troisième et une quatrième couches empilées, la seconde et la troisième couches constituant les couches guides respectivement du premier et du second guides et présentant des indices de réfraction supérieurs à ceux des première et quatrième couches, l'indice de réfraction de la seconde couche étant en outre différent de celui de la troisième couche, cette troisième couche comportant des cavités remplies d'un gaz ayant un indice de réfraction inférieur à celui de la troisième couche.

Pour une structure guide à faible saut d'indice de réfraction, l'écart d'indice de réfraction typique entre la couche guide et les couches adjacentes est de $5.10^{-3}$ à $2.10^{-2}$ et pour une structure à fort saut d'indice, cet écart d'indice typique est de $10^{-1}$ à $5.10^{-1}$.

Un guide à forte variation d'indice de réfraction est par exemple constitué de couches inférieure et supérieure en silice non dopée d'indice 1,45 ou dopée au phosphore et/ou au bore, d'indice 1,46 et d'une couche guide en nitrure de silicium d'indice 2,01 ou encore en oxynitrure de silicium ($SiO_xN_y$ avec $0<x<2$ et $0<y<4/3$) d'indice 1,45 à 2, en alumine d'indice 1,65 ou en matériaux organiques tels que le PMMA (polyméthacrylate de méthyle) et les polyimides dont l'indice varie de 1,45 à 1,7.

Un guide de lumière à faible variation d'indice de réfraction est en particulier constitué de couches inférieure et supérieure en silice non dopée ou dopée au fluor et/ou au bore et d'une couche guide en silice dopée au germanium, titane, azote ou phosphore.

Le dopage de la silice par du bore ou du fluor diminue son indice de réfraction alors que le dopage par du germanium, phosphore, azote ou titane augmente l'indice de réfraction de la silice.

La réalisation d'un réseau de diffraction à très fort coefficient de couplage conforme à l'invention et donc à faible nombre de traits (5 à 25 traits) permet un couplage entre le guide optique à forte variation d'indice et le guide optique à faible variation d'indice avec une sensibilité en longueur d'onde considérablement réduite par rapport à ceux de l'art antérieur et en tout cas compatible avec les sources lumineuses dont le spectre d'émission a des largeurs de 10 à 20 nm.

De façon avantageuse les réseaux peuvent travailler en mode réflectif, ce qui présente l'avantage de les rendre peu sensibles aux erreurs technologiques (pas de réseaux, largeur des cavités, indices effectifs des modes guidés).

Par ailleurs, les miroirs et lames séparatrices de l'invention travaillent avantageusement au voisinage de l'angle limite de réflexion totale Al.

L'invention a aussi pour objet un procédé de fabrication d'un composant optique tel que défini précédemment.

Selon un premier mode de mise en oeuvre, ce procédé comprend les étapes suivantes :

- dépôt d'au moins une première couche sur l'ensemble d'un substrat,
- réalisation d'au moins une tranchée dans cette première couche dont le rapport hauteur/largeur est $\geq 0,5$, et
- dépôt chimique en phase vapeur (CVD) d'une seconde couche sur l'ensemble de la première couche ainsi gravée, formant ainsi une cavité fermée remplie d'air dans la tranchée.

La seconde couche peut être déposée par la technique CVD basse pression (LPCVD) ou par la technique CVD assistée par un plasma (PECVD).

Les inventeurs ont trouvé que cette technique de dépôt isotrope d'une couche de matériau conduisait nécessairement à la formation d'une bulle de gaz, généralement d'air, dans la tranchée lorsque le rapport hauteur/largeur était au moins égal à 0,5. La composition exacte de cet air est bien entendu fixée par celle de l'atmosphère gazeux régnant dans l'enceinte de dépôt.

Le volume et la forme de la bulle d'air dépendent du rapport hauteur/largeur ainsi que des propriétés de la première couche.

En outre, il est possible de modifier la forme et le volume de cette bulle d'air en effectuant des traitements de surface des couches déposées. En particulier, on peut effectuer un traitement thermique des première et seconde couches, de façon à les faire fluer. Ce fluage est possible en particulier avec des couches en silice avantageusement dopée bore, phosphore ou les deux de façon à abaisser la température du traitement par rapport à la température de fluage de la silice non dopée.

Comme il est relativement facile de réaliser des gravures dont le rapport hauteur/largeur est de l'ordre de 1 à 5, on constate que la création de cette bulle d'air n'est absolument pas critique.

Selon un second mode de mise en oeuvre, le procédé de fabrication du composant optique de l'invention comprend les étapes suivantes :

(a) - dépôt d'au moins une première couche sur l'ensemble d'un substrat,
(b) - réalisation d'au moins une tranchée dans cette première couche,
(c) - dépôt d'un matériau temporaire dans la tranchée et au-dessus de celle-ci, que l'on peut éliminer sélectivement par rapport au substrat à la première couche et à une seconde couche,
(d) - dépôt sur la structure obtenue en (c) de la seconde couche, et
(e) - élimination du matériau temporaire formant ainsi une cavité fermée remplie d'air dans la tranchée.

Ce second mode de mise en oeuvre est d'application beaucoup plus générale que le premier mode puisqu'il permet, contrairement au mode précédent, la création d'une bulle d'air dont le rapport hauteur/largeur est inférieur à 0,5 et par exemple allant de 0,1 à 0,3.

Par ailleurs, cette seconde méthode est beaucoup plus reproductible en ce qui concerne la forme des bulles.

Selon un troisième mode de mise en oeuvre, le procédé de fabrication du composant optique de l'invention comprend les étapes suivantes :

(A) - dépôt d'une première couche sur l'ensemble d'un substrat,
(B) - dépôt d'une couche en matériau temporaire, sur l'ensemble de la première couche, que l'on peut graver sélectivement par rapport à cette première couche, à une seconde couche et au substrat,
(C) - gravure de cette couche temporaire de façon à former au moins un plot en matériau temporaire,

(D) - dépôt sur la structure obtenue en (C) de la seconde couche, et
(E) - élimination du plot en matériau temporaire, formant ainsi une cavité fermée remplie d'air à l'emplacement du plot.

Les trois modes de mise en oeuvre sont applicables aux différents types de composants optiques cités précédemment.

Selon l'application envisagée, on peut remplacer cette bulle d'air par un autre gaz, par injection après le dépôt de la seconde couche.

D'autres caractéristiques et avantages de l'invention ressortiront mieux de la description qui va suivre, donnée à titre illustratif et non limitatif.

La description se réfère aux dessins annexés, dans lesquels :

- la figure 1, déjà décrite, représente schématiquement une lame séparatrice en optique intégrée conforme à l'art antérieur,
- la figure 2 représente schématiquement les différentes étapes de fabrication d'une lame séparatrice en optique intégrée conforme à l'invention,
- les figures 3A et 3B représentent des variantes de réalisation d'une lame séparatrice conforme à l'invention,
- la figure 4 représente schématiquement un miroir en optique intégrée conforme à l'invention,
- la figure 5 représente schématiquement un réseau de diffraction conforme à l'invention,
- la figure 7 représente schématiquement les différentes étapes de fabrication d'une lame séparatrice conforme à l'invention, selon un second mode de mise en oeuvre,
- les figures 8 à 11 représentent schématiquement les différentes étapes de réalisation d'un réseau de diffraction pour le couplage co-directif de deux guides superposés à profil de mode guidé différent, selon quatre mises en oeuvre différentes, et
- la figure 12 représente schématiquement un microguide optique conforme à l'invention.

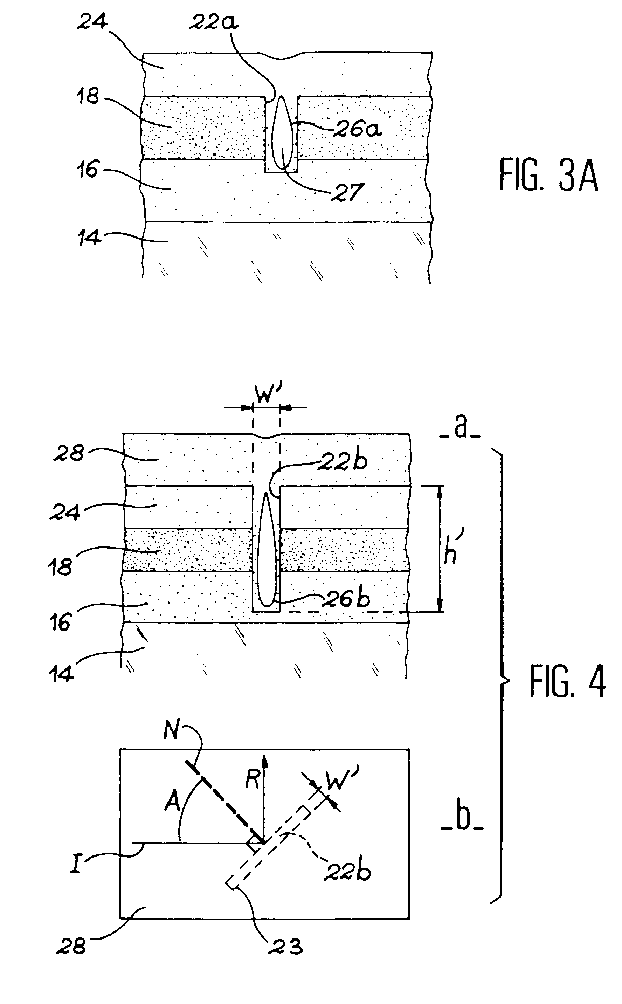

Sur les figures 2 et 3A, on a représenté schématiquement la fabrication d'une lame séparatrice conforme à l'invention. Sur ces figures, on voit un substrat 14 monocristallin en silicium sur lequel on a formé une couche d'oxyde de silicium 16 non intentionnellement dopé de 8 à 12 micromètres par exemple par oxydation thermique haute pression du substrat sous atmosphère d'oxygène entre 800 et 1200°C. L'indice de réfraction de cette couche d'oxyde 16 est de 1,45 environ.

Par dépôt chimique en phase vapeur assisté ou non par un plasma, on dépose la couche guide 18 en oxyde de silicium dopé au phosphore, au germanium, à l'azote ou au titane, ayant une épaisseur de 3,2 à 10 micromètres. Le dopage au phosphore est assuré par $10^{21}$ à $10^{22}$ atomes/cm$^3$. L'indice de réfraction de cette couche 18 est voisin de 1,46.

Par les procédés classiques de photolithographie, on forme un masque 19 en résine photosensible (partie a, figure 2) comportant une ouverture 21 fixant l'emplacement de la lame séparatrice ainsi que ses dimensions. A l'aide de ce masque, on effectue alors une gravure anisotrope de la couche 18 formant ainsi une tranchée 22 dans la zone de la couche 18 située en regard de l'ouverture 21 du masque. Cette gravure est par exemple une gravure ionique réactive (GIR) utilisant du $CHF_3$ ou du $CF_4$ comme agent d'attaque.

Elle peut être effectuée sur tout ou partie de l'épaisseur de la couche 18 ou, comme représenté sur la figure 3A, il est possible que cette gravure atteigne aussi la couche inférieure 16 du guide sans toutefois aller jusqu'au substrat 14. La tranchée ainsi formée porte la référence 22a.

On note h la hauteur de la tranchée et w sa largeur. Selon cette méthode, le rapport h/w est au moins égal à 0,5.

De préférence, une lame séparatrice doit présenter un coefficient de réflexion compris entre 30 et 70%. Grossièrement, il suffit que h soit de l'ordre de la grandeur de la moitié de l'extension spatiale (ou largeur spatiale du mode guidé).

Sur la figure 2, h peut être égal à 3,4 micromètres et w égal à 2,5 micromètres, et sur la figure 3A, h peut être égal à 5 micromètres pour une même valeur de w.

Après élimination du masque de gravure 19 par un plasma d'oxygène, on dépose une couche 24 d'oxyde de silicium non intentionnellement dopé de 1 à 6 micromètres d'épaisseur ou contenant éventuellement un dopant diminuant l'indice de réfraction de l'oxyde comme le bore ou le fluor avec des concentrations de $10^{21}$ à $10^{22}$ atomes/$cm^3$.

Cette couche est déposée par la technique de dépôt chimique en phase vapeur assisté par un plasma (PECVD) à des températures de 300 à 500°C par décomposition thermique de silane et d'oxygène ou par la technique de dépôt chimique en phase vapeur basse pression (130 Pa) avec ces mêmes gaz (LPCVD). Cette couche 24 constitue la couche supérieure du guide de lumière et assure une protection contre l'environnement de la lame séparatrice.

Comme représenté sur la partie b de la figure 2 et sur la figure 3A, le dépôt par PECVD ou LPCVD d'une couche de silice conduit nécessairement, pour h/w≥0,5 à la formation d'une cavité 26 ou 26a renfermant de l'air 27 logée dans la tranchée respectivement 22, 22a. La présence de cette bulle d'air entraîne une modification locale importante de l'indice effectif du mode guidé.

Pour h/w<0,5, il est très difficile de déterminer la présence ou non d'une bulle d'air par cette méthode.

Il est possible d'améliorer la reproductibilité de la forme de la bulle en effectuant un fluage des couches contenant la cavité consistant en un traitement thermique au four entre 900°C et 1100°C de la structure.

Pour un faisceau de lumière guidé de 800nm, le coefficient de réflexion R (figure 1b) de la lame séparatrice ainsi formée passe de 0 à 95% lorsque h varie de 0 à 5 micromètres, w étant fixé à 2,5 micromètres. Lorsque h=3,4 micromètres les coefficients de transmission et de réflexion de la lame sont voisins de 50% et l'angle limite de réflexion Al est voisin de 45°.

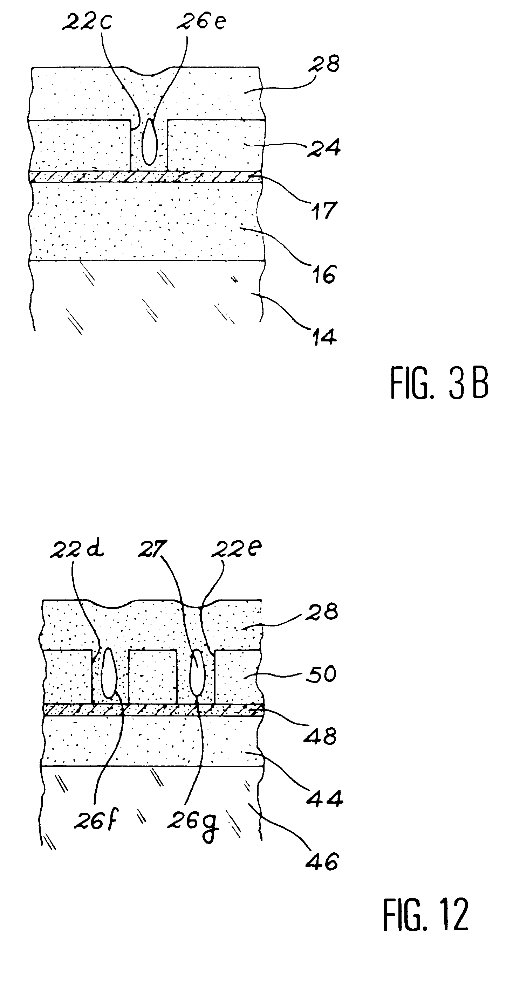

Il est aussi possible, comme représenté sur la figure 3B, de former la tranchée 22c sur tout ou partie de la couche supérieure 24 recouvrant le guide. Dans ce cas, la gravure de la couche 24 est suivie du dépôt d'une couche 28 de $SiO_2$ non dopé, de 1 à 10 micromètres d'épaisseur par PECVD ou LPCVD dans les mêmes conditions que décrites à la figure 2 pour la couche 24. Il se forme ainsi une cavité 26e remplie d'air dont la forme est fixée par le rapport hauteur/largeur de la tranchée 22c.

Dans la variante représentée sur la figure 3B, la couche guide, référencé 17, est réalisée en nitrure de silicium déposé par LPCVD et présente une épaisseur de 100 à 400nm.

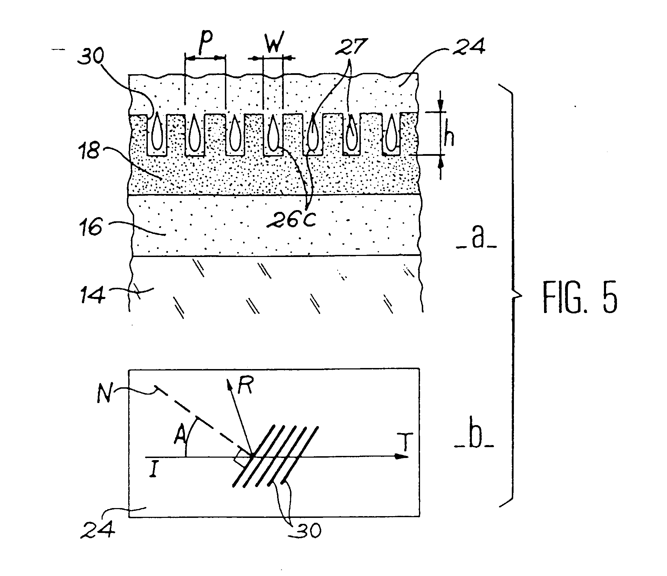

Sur la figure 4, on a représenté schématiquement un miroir intégré conforme à l'invention. Comme précédemment, ce miroir est formé dans un guide d'onde en $Si/SiO_2/SiO_2$ dopée+/$SiO_2$. Les techniques de dépôt et les épaisseurs de ces couches sont identiques à celles décrites en référence à la figure 2.

Après dépôt des couches 16, 18 et 24 successivement (partie a), on effectue, à l'aide d'un masque approprié (voir figure 2a) une gravure anisotrope de l'empilement des couches 16, 18 et 24. On note h' la profondeur de la tranchée 22b formée et w' sa largeur. Cette gravure est effectuée sur toute l'épaisseur des couches 24 et 18 et sur tout ou partie seulement de la couche 16 ; les agents d'attaque sont par exemple $CHF_3$ ou $CF_4$.

Après cette gravure, on effectue le dépôt d'une couche d'oxyde de silicium non dopé 28 de 1 à 10 micromètres par PECVD ou LPCVD dans les mêmes conditions que décrites à la figure 2 pour la couche 24. Il se forme ainsi une bulle d'air 26b dont la forme est fixée par le rapport h'/w' de la tranchée 22b.

La largeur w' de la tranchée 22b doit être supérieure à une valeur wo minimum afin d'éviter tout recouplage du mode guidé dans la structure guide. Sur la partie b de la figure 4, I et R représentent respectivement les faisceaux incident et réfléchi et N représente la normale au miroir défini par la tranchée 22b.

L'angle A entre la normale et le faisceau incident doit être supérieur à l'angle de réflexion total Al défini dans l'équation (2) :

$$Al = ArcsinN2/N1eff \qquad (2)$$

où N1eff est l'indice effectif du mode guidé et N2 représente l'indice de la bulle d'air, soit 1.

Dans l'exemple représenté, N1eff est de l'ordre de 1,47 et Al de l'ordre de 43°. Ainsi, A doit être supérieur à 43°.

La formule (2) ci-dessus est surtout applicable au miroir ; elle correspond au cas où le mode guidé n'existe plus dans la cavité contenant le fluide. Toutefois, elle peut être utilisée à la place de la formule (1) pour les lames séparatrices, selon la valeur du coefficient de réflexion recherchée.

Lorsque N1effsinA est < N2, on n'est plus en présence d'un miroir, mais seulement en présence d'une lame séparatrice.

Si l'on remplace la couche 18 de $SiO_2$ dopée par Ti, Ge, $N_2$ ou P par une couche de $Si_3N_4$ de 165 nm déposée par LPCVD par décomposition de silane et d'ammoniac, on obtient un indice N1eff du mode guidé voisin de 1,73. Dans ces conditions, A doit être supérieur à 35,3° pour avoir un miroir.

L'onde évanescente associée à la réflexion totale sur le miroir 22b a une profondeur de pénétration donnée par la fonction :

$$\exp\left(-(2\pi/\lambda\sqrt{N1eff^2 \sin^2 A - 1})\,x\right)$$

Cette fonction a une valeur égale à 1/e quand

$$x = (\lambda/2\pi \sqrt{N1eff^2 \sin^2 A - 1}).$$

Pour N1eff=1,47 et A=45°, on obtient :

$$\exp(-2,2x)=1/e$$

et donc x=450nm pour $\lambda$=800nm.

Si la largeur w' est très supérieure à 450 nm et par exemple égale à 3 ou 4 micromètres, pratiquement aucune énergie lumineuse ne peut franchir la bulle d'air 26b. Le miroir ainsi formé est très performant.

Si A augmente, on peut diminuer la largeur w'.

Pour éviter que l'onde évanescente associée à la réflexion totale n'atteigne la face arrière 23 du miroir, il faut que l'expression :

$$2\pi/\lambda\,(\sqrt{N1eff^2 \sin^2 A - N2})\,wm$$

soit très supérieure à 1, avec wm la valeur minimum de W'.

Pour N1eff=1,47, A=45°, N2=1 (cas de l'air) et $\lambda$=800 nm, on a wm de l'ordre de 2 micromètres, ce qui correspond à une atténuation de l'onde évanescente d'un facteur 100. Plus A augmente (et tend vers $\pi/2$) plus la condition ci-dessus peut être réalisée avec une valeur wm faible.

La profondeur h' n'est pas critique ; il suffit qu'elle soit supérieure à une valeur ho minimum grossièrement égale à la largeur spatiale du mode guidé. La largeur spatiale du mode guidé représente la largeur à mi-hauteur du profil de l'intensité lumineuse de l'onde qui se propage dans le guide.

De la même façon que pour la lame semi-réfléchissante et le miroir, on peut fabriquer un réseau de diffraction, comme représenté par exemple sur la figure 5. Le guide d'onde est identique à celui décrit en référence aux figures 2 et 3A.

Après dépôt de la couche guide 18 sur la couche inférieure 16 du guide (partie a), on réalise plusieurs tranchées 30 parallèles entre elles et équidistantes ; w représente la largeur des tranchées 30 et p représente le pas du réseau.

Le pas du réseau p détermine l'angle de fonctionnement A, représenté sur la partie b de la figure 5, qui est l'angle que forme le faisceau incident avec les traits 30 du réseau.

Comme précédemment, le dépôt de la couche de $SiO_2$ 24 par LPCVD ou PECVD sur la couche guide 18 conduit à la formation de bulles et donc à des cavités 26c remplies d'air 27, logées dans chacune des tranchées 30.

La profondeur des tranchées h et l'indice du matériau qui remplit ces tranchées, ici l'air, déterminent le coefficient de couplage K entre le réseau et le faisceau incident et donc la longueur de couplage Lc=$\pi$/2K du mode guidé avec le réseau. La création des bulles d'air 26c d'indice 1 augmente la valeur de K et donc diminue la longueur de couplage Lc. Ceci permet de rendre le réseau moins sensible aux longueurs d'onde.

Etant donné qu'il est difficile de contrôler la valeur du coefficient de couplage K qui dépend fortement de h et de la forme des bulles 26c, on fait systématiquement travailler le réseau en réflexion. Ceci permet en outre de rendre le réseau moins sensible aux erreurs technologiques, en particulier sur la valeur du pas, la largeur des tranchées ou sur les indices effectifs des modes guidés.

Ainsi, dans la mesure où la longueur d'interaction du réseau avec l'onde incidente L est très supérieure à 1/K, donc à Lc, la valeur de la réflexion, dans le cas d'un réseau travaillant en réflexion, est indépendante de Lc et donc de K. En pratique, on prend L=2Lc.

Conformément à l'invention, il est possible de remplacer l'air par un autre gaz, et de former ainsi un réseau de composants reliés entre eux par des canaux. Ainsi, on peut rendre actifs les composants décrits précédemment en référence aux figures 2 à 5.

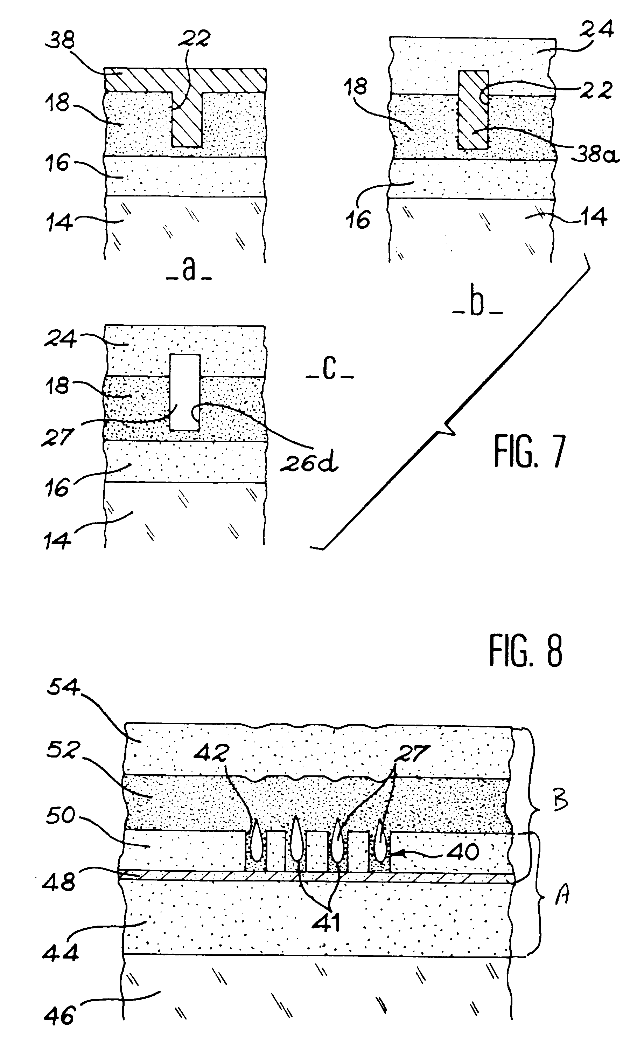

Sur la figure 7, on a représenté un autre mode de fabrication des composants conformes à l'invention et en particulier la fabrication d'une lame séparatrice ou semi-réfléchissante.

Après formation de la tranchée 22 par gravure partielle de la couche 18, on dépose sur l'ensemble de la structure (partie a) une couche 38 d'un matériau que l'on peut graver sélectivement par rapport à la couche 18 et à la couche supérieure 24 du guide optique. Dans le cas de couches 18 et 24 en silice, on peut utiliser une couche métallique et en particulier une couche d'aluminium ou de chrome.

Cette couche 38 peut être déposée par toutes les techniques de dépôt connues et en particulier par pulvérisation cathodique ou par dépôt électrolytique pour une couche en métal. Cette couche présente une épaisseur supérieure à celle de la tranchée 22. Pour une hauteur h de la tranchée 22 de 3,4 micromètres, la couche 38 présente par exemple une épaisseur de 10 micromètres.

Cette couche est ensuite gravée sélectivement de façon à garder du métal au moins en regard de la tranchée 22, c'est-à-dire dans et dessus la tranchée (du métal pouvant être conservé également de part et d'autre de la tranchée). Cette gravure est réalisée à l'aide d'un masque de photolithogravure non représenté. Le plot métallique obtenu est référencé 38a (partie b).

Il est aussi possible de réaliser directement le plot métallique 38a remplissant la tranchée 22 par la technique "lift of" bien connue de l'homme de l'art lorsque la tranchée a une largeur ≥ 1,5 micromètre.

On effectue ensuite le dépôt de la couche de silice 24. Ce dépôt peut être fait par toutes les techniques de dépôt connues et en particulier par CVD en utilisant du silane et de l'oxygène comme gaz de dépôt.

On effectue ensuite, comme représenté sur la partie c de la figure 7, une attaque sélective du plot métallique 38a conduisant à son élimination complète. Cette élimination peut être faite par une attaque chimique en solution à partir d'un trou réalisé par exemple dans la couche 24 et relié au métal. Pour de l'aluminium, on utilise une solution d'acide phosphorique et pour du chrome une solution de sel de cérium.

On obtient ainsi une lame séparatrice équipée d'une cavité 26d renfermant de l'air dont la forme est identique à celle du plot 38a.

Cette méthode permet d'utiliser toutes les techniques de dépôt pour constituer la couche 24. En outre, elle s'applique à toutes les valeurs de h/w supérieures à 0,1 alors que la méthode décrite en figure 2 n'est utilisable que pour des rapports de h/w supérieurs à 0,5.

Sur la figure 8, on a représenté schématiquement deux guides superposés couplés par un réseau de diffraction 40 de force de couplage élevée, conforme à l'invention.

La structure guide à forte variation d'indice de réfraction, notée A, est constituée par exemple d'une couche inférieure 44 d'indice de réfraction n1 déposée sur un substrat 46, d'une couche guide 48 d'indice de réfraction n2 et d'une couche supérieure 50 d'indice de réfraction n3, avec la couche 48 intercalée entre les couches 44 et 50 et n2 supérieur à n1 et n3.

La structure guide à faible variation d'indice, notée B, est constituée par exemple de la couche 50, d'une couche guide 52 d'indice de réfraction n4 et d'une couche supérieure 54 d'indice de réfraction n5, avec la couche 52 intercalée entre les couches 50 et 54 et n4 supérieur à n3 et n5. En outre, n4 doit être supérieur à n1 et n2 doit être supérieur à n4 (l'ordre de superposition des structures A et B peut bien entendu être inversé).

Pour un substrat en silicium 46, les couches 44, 50 et 54 peuvent être réalisées en silice non intentionnellement dopée ou dopée avec du fluor ou du bore ; la couche 48 peut être réalisée en nitrure de silicium, en oxynitrure de silicium ou en alumine et la couche 52 en silice dopée avec du phosphore, du germanium, de l'azote ou du titane. Les couches 48, 50, 52 et 54 peuvent être déposées par LPCVD ou PECVD et la couche 44 formée par oxydation thermique du substrat, de façon à présenter de bonnes qualités optiques.

La structure représentée sur la figure 8 a pratiquement deux modes de propagation très différents.

Pour que cette structure fonctionne, il faut en outre que l'épaisseur de la couche 48 soit inférieure à la valeur maximale pour être monomode, de l'ordre de 0,05 à 0,4 micromètre suivant les longueurs d'onde utilisées pour une couche en nitrure de silicium, et que l'épaisseur de la couche 52 soit aussi inférieure à une valeur maximale pour être monomode, de l'ordre de 1 à 8 micromètres suivant les longueurs d'onde utilisées et les écarts d'indice choisis entre les différentes couches.

En outre, l'épaisseur e1 de la couche 44 doit assurer l'isolement des deux modes de propagation des guides A et B du substrat 46. Aussi, cette épaisseur doit être supérieure à la profondeur de pénétration de l'onde évanescente du mode guidé le moins confiné qui se propage dans la couche 52. Typiquement, e1 est supérieur à 12-15 micromètres.

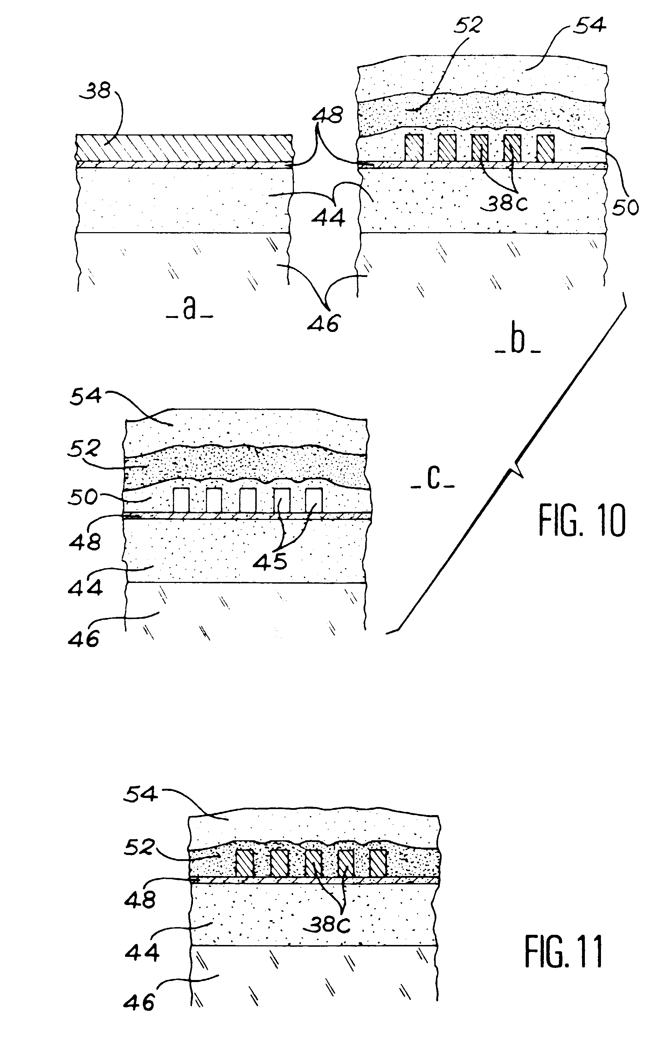

L'épaisseur de la couche 50 conditionne la force de couplage du réseau. Elle peut être nulle (figure 11). Le couplage entre les deux modes guidés diminue avec l'épaisseur de la couche 50. Au-delà de 3 micromètres pour des couches en silice et pour une couche 48 en nitrure de silicium d'épaisseur de l'ordre de 50 nm, le couplage n'existe plus.

L'épaisseur de la couche 54 n'est pas critique.

En particulier, les couches 44, 48, 50, 52 et 54 ont respectivement une épaisseur de 8 à 15 micromètres, de 50 à 200 nm, de 0,3 à 2 micromètres, de 1 à 8 micromètres et de 2 à 10 micromètres.

Comme précédemment, le pas du réseau et l'angle d'incidence sur ce réseau sont choisis pour permettre au réseau 40 de travailler en réflexion de façon à éviter que l'énergie lumineuse couplée de la structure à forte variation d'indice vers la structure à faible variation d'indice ne puisse revenir dans la structure à forte variation d'indice.

Le couplage entre les structures A et B, via le réseau, est possible lorsque $\vec{kA} + \vec{kR} = \vec{kB}$ avec $|kA|=(2\pi/\lambda)nA$, $|kB|=(2\pi/\lambda)nB$ et $|kR|=2\pi/p$ où $nA$ et $nB$ sont les indices effectifs des structures guides A et B, $\lambda$ la longueur d'onde de la lumière incidente, $p$ le pas de réseau et $\vec{kA}$, $\vec{kB}$ et $\vec{kR}$ sont les vecteurs d'onde des structures A, B et du réseau.

Dans certains cas particuliers, il est possible de faire fonctionner le réseau 40 à un autre ordre que l'ordre +1 ou -1 afin d'augmenter son pas p et faciliter ainsi sa réalisation. Ceci n'est possible qu'avec un angle d'incidence particulier pour lequel les ordres inférieurs à celui utilisé ne peuvent exister.

Comme représenté sur la figure 8, le réseau de couplage 40 peut être obtenu en gravant la couche 50 juste avant de déposer la couche guide 52, de façon à former des tranchées 42 parallèles entre elles dont le rapport hauteur/largeur est au moins égal à 0,5 puis en déposant la couche 52 par LPCVD ou PECVD, comme décrit précédemment en référence à la figure 2.

Les cavités 41 remplies de bulles d'air 27 formées lors du dépôt de la couche 52 et logées dans les tranchées 42 assurent le couplage des deux structures guides. En pratique, ces cavités 41 sont au nombre de 10 à 30 et le pas du réseau est de 0,3 à 3 micromètres.

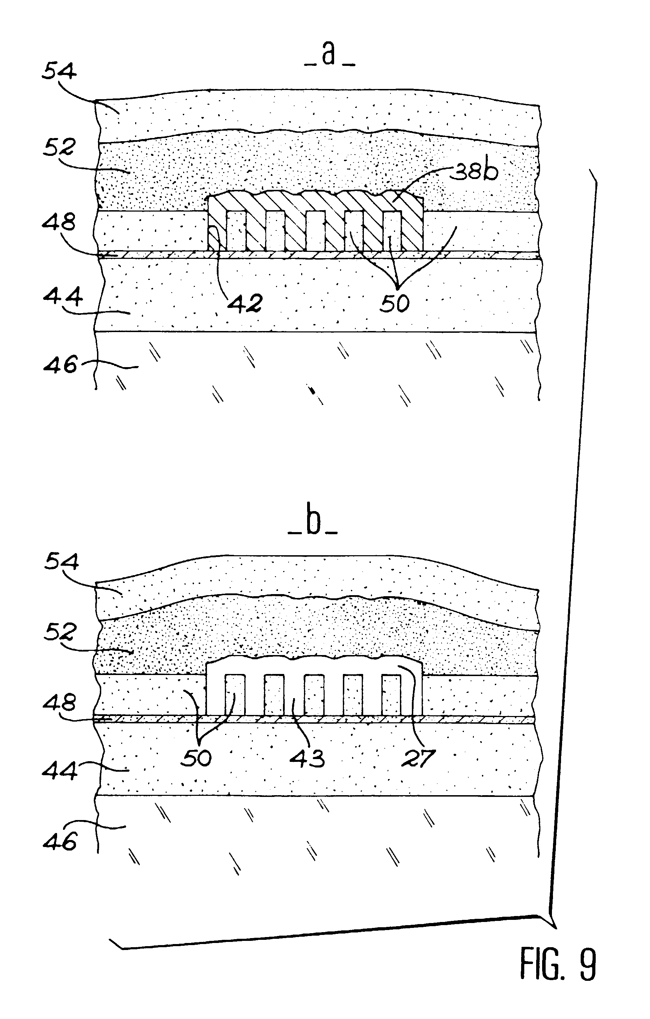

Sur la figure 9, on a représenté un autre mode de réalisation du réseau de diffraction assurant le couplage des deux structures guides. Dans ce mode de réalisation, on effectue sur la couche 50 gravée (partie a) le dépôt d'une couche métallique que l'on peut graver sélectivement par rapport au substrat 46 et aux couches 44, 48, 50, 52 et éventuellement 54 lorsque le métal est éliminé après le dépôt de la couche 54, puis on grave cette couche de façon à ne garder du métal 38b qu'en regard des tranchées 43 pratiquées dans la couche 50. La gravure de cette couche métallique est suivie du dépôt des couches 52 et 54, comme décrit précédemment en référence aux figures 2 et 7. (Bien entendu, cette couche 54 peut être déposée aussi après l'élimination totale du métal).

Enfin, on élimine le métal 38b à l'aide d'acide orthophosphorique pour une couche en aluminium et des structures guides en $Si/SiO_2/Si_3N_4/SiO_2/SiO_2$ dopée +/ $SiO_2$, par l'intermédiaire d'au moins un trou traversant par exemple les couches surplombant le métal 38b. L'espace occupé initialement par le métal 38b et en particulier les tranchées 43 se trouve alors rempli d'air 27 (partie b de la figure 9).

Le réseau de couplage peut aussi être réalisé comme représenté sur la figure 10. Dans ce mode de réalisation, on effectue le dépôt de la couche métallique 38 directement sur toute la couche guide 48 (partie a de la figure 10). On effectue alors une gravure sensiblement anisotrope de la couche 38 de façon à former des plots métalliques 38c parallèles entre eux et équidistants. Pour une couche d'aluminium, cette gravure anisotrope est effectuée par voie sèche avec un gaz chloré ou par voie humide avec de l'acide othophosphorique comme agent d'attaque. Puis successivement, on effectue le dépôt des couches 50, 52, 54 (partie b) comme décrit précédemment. Ensuite, on élimine les plots métalliques 38c gravés, par voie humide donnant naissance à des cavités 45 remplies d'air.

Les couches 52 et 54 peuvent être dans ce cas disposées avant ou après élimination des plots métalliques. Pour être éliminés, ces plots métalliques sont reliés entre eux dans la couche 50, à l'extérieur de la zone utile du composant, au moins un trou pratiqué dans la couche 50 permettant d'accéder au métal 38.

Cette méthode peut poser quelques difficultés pour des pas de réseau très petits, inférieurs à 1 micromètre en ce qui concerne l'élimination des plots métalliques 38c, contrairement au procédé décrit à la figure 9.

Dans le mode de réalisation représenté sur la figure 10, la couche 50 peut présenter une épaisseur nulle, comme représenté sur la figure 11. Dans ce cas, on dépose directement la couche 52 sur les plots métalliques 38c. Avant ou après dépôt de la couche 54, on élimine les plots comme précédemment.

Dans le mode de réalisation de la figure 9, il est aussi possible de supprimer la couche 50. Dans ce cas, le dépôt de la couche métallique se fait sur la couche 48 dans laquelle ont été réalisées les tranchées 42 parallèles.

Sur les figures 5 et 8 à 11, on a représenté des réseaux à pas constants qui travaillent donc avec des faisceaux incidents collimatés.

Pour des faisceaux incidents non collimatés et donc associés à des points source, on peut utiliser des réseaux analogues à ceux représentés associés à des optiques de collimation du type miroir ou lentille intégrés conformes à l'invention, ou encore utiliser un réseau dont les traits sont elliptiques ou paraboliques, ou bien utiliser un réseau à pas variable assurant à la fois la fonction de couplage et d'imagerie. Ceci permet, dans certains cas, de diminuer le nombre de composants d'un circuit optique complet.

Grâce au réseau de couplage conforme à l'invention, il est possible de réaliser des séparateurs de polarisation ou des convertisseurs de polarisation.

En effet, les structures guides à faible variation d'indice sont insensibles à la polarisation du faisceau incident contrairement aux structures guides à forte variation d'indice. Aussi, est-il très difficile de séparer spatialement ou même, plus simplement, de sélectionner l'une des polarisations transverses électriques TE ou transverses magnétiques TM du mode guide dans une structure à faible variation d'indice.

En revanche, ceci est possible grâce à la superposition des deux guides, comme décrit précédemment, couplés par des réseaux conformes à l'invention.

Il est aussi possible de réaliser un convertisseur de polarisation pour des circuits de lecture optique associés à une tête magnétique de lecture/ écriture, comme décrit dans le document FR-A-2 606 921.

Bien entendu, l'air contenu dans les cavités des réseaux peut être remplacé par un autre gaz.

De plus, les procédés de fabrication d'un réseau décrits ci-dessus sont aussi applicables à la réalisation des miroirs, des lames séparatrices et des lentilles conformes à l'invention.

Enfin, les composants de l'invention peuvent être formés dans d'autres matériaux que ceux cités précédemment et en particulier dans du niobate ou tantalate de lithium.

Sur la figure 12, on a représenté un microguide conforme à l'invention, réalisé dans une structure guide Si/

SiO$_2$/Si$_3$N$_4$/SiO$_2$. Ce microguide comporte dans sa couche supérieure 50 en SiO$_2$ deux cavités 26f, 26g remplies d'air. La différence d'indice entre l'air et la silice de la couche 50 assure un bon confinement latéral de la lumière. Ces cavités sont obtenues en réalisant deux tranchées 22d et 22e parallèles dans la couche 50 puis en déposant par LPCVD ou PECVD une couche 28 de SiO$_2$ non dopé.

Il est aussi possible d'assurer le confinement latéral de la lumière en réalisant les deux cavités remplies d'air dans la couche inférieure 44 du guide par le procédé décrit en référence aux figures 9 ou 10.

Les tranchées peuvent être formées dans tout ou partie de la couche 50 ou 44 mais pas dans la couche guide 48.

## Revendications

1. Composant optique protégé contre l'environnement, intégré sur un substrat (14; 46) et associé à un guide de lumière (16,18,24; 16,17,24; 44,48,50; 44,48,50,52) également intégré sur le même substrat, ledit composant comportant au moins une cavité fermée (26; 26a; 26b; 26e; 26c; 26d; 26f,26g; 41; 43; 45) isolée de l'environnement, formée dans une tranchée (22; 22a; 22b;22c; 22d,22e; 30; 42) ménagée dans au moins une couche (16, 18, 24, 50, 52) dudit guide de lumière, cette cavité étant remplie d'un gaz (27) ayant un indice de réfraction inférieur à l'indice de réfraction de ladite couche.

2. Composant optique selon la revendication 1, caractérisé en ce que ledit gaz est l'air.

3. Composant optique selon l'une quelconque des revendications 1 et 2, caractérisé en ce que la tranchée présente un rapport hauteur/largeur ≥0,1.

4. Composant optique selon l'une quelconque des revendications 1 à 5, caractérisé en ce que la tranchée présente un rapport hauteur/largeur allant de 1 à 5.

5. Composant optique selon l'une quelconque des revendications 1 à 4, caractérisé en ce que le guide optique comprend une couche inférieure (16), une couche guide (18, 17), une couche supérieure (24) et une couche de recouvrement (28) successivement empilées sur le substrat (14), la couche guide ayant un indice de réfraction supérieur à celui des couches inférieure, supérieure et de recouvrement et en ce que la tranchée contenant la cavité est située dans l'une au moins des couches inférieure, guide et supérieure.

6. Composant optique selon l'une quelconque des revendications 1 à 5, caractérisé en ce que le guide optique comprend une couche supérieure (24, 50, 54) et une couche inférieure en silice (16, 44, 50), disposées de part et d'autre d'une couche guide (17, 18, 48, 52) en nitrure de silicium, en silice dopée avec un dopant augmentant son indice de réfraction ou en SiO$_x$ N$_y$ avec 0<x<2 et 0<y<4/3.

7. Composant optique du type réseau de diffraction, selon l'une quelconque des revendications 1 à 6, caractérisé en ce qu'il comprend plusieurs tranchées (40;42) disposées parallèlement les unes aux autres et contenant chacune une cavité (26c, 41;43;45) remplie dudit gaz, les différentes cavités constituant les traits du reseau.

8. Composant optique du type réseau selon la revendication 7 lorsque celle-ci dépend des revendications 5 ou 6, caractérisé en ce que les tranchées (40;42) sont ménagées dans la couche guide (18, 52) ou la couche supérieure (50).

9. Composant optique du type miroir selon l'une des revendications 5 ou 6, caractérisé en ce que la tranchée (22b) s'étend de la couche supérieure (24) à la couche inférieure (16) du guide de lumière.

10. Composant optique du type séparateur selon l'une des revendications 5 ou 6, caractérisé en ce que la tranchée (22) est ménagée essentiellement dans la couche supérieure (18) du guide de lumière.

11. Composant optique du type microguide selon l'une quelconque des revendications 1 à 6, caractérisé en ce qu'il comprend deux tranchées (22d, 22e) disposées parallèlement et contenant chacune une cavité (26e,26f) remplie dudit gaz.

12. Composant optique du type coupleur, selon l'une quelconque des revendications 1 à 8, destiné à coupler un premier et un second guides de lumière intégrés superposés, à variations d'indice très différentes, caractérisé en ce que le premier guide consiste en une première couche supérieure (50) et une première couche inférieure (44), disposées de part et d'autre d'une première couche guide (48) d'indice de réfraction supérieur à celui des premières couches supérieure et inférieure, et le second guide consiste en une seconde couche supérieure (54) et une seconde couche inférieure (50) disposées de part et d'autre d'une seconde couche guide (52) d'indice de réfraction supérieur à celui des secondes couches inférieure et supérieure, la première couche supérieure et la seconde couche inférieure constituant une seule et même couche dite de couplage dans laquelle sont ménagées plusieurs tranchées (42) contenant chacune une cavité (45, 43, 41) renfermant ledit gaz.

13. Composant selon la revendication 12, caractérisé en ce que les première et seconde couches inférieure et supérieure sont en silice, la première couche guide en $Si_3N_4$ ou $SiO_xN_y$ avec $0<x<2$ et $0<y<4/3$, la seconde couche guide en silice dopée avec un dopant augmentant son indice de réfraction et les cavités sont remplies d'air.

14. Composant optique du type coupleur, selon l'une quelconque des revendications 1 à 8, destiné à coupler un premier et un second guides de lumière intégrés superposés à variations d'indice très différentes, caractérisé en ce que les guides comportent une première (46), une seconde (48), une troisième (52) et une quatrième (54) couches empilées, la seconde et la troisième couches constituant les couches guides respectivement du premier et du second guides et présentant des indices de réfraction supérieurs à ceux des première et quatrième couches, l'indice de réfraction de la seconde couche étant en outre différent de celui de la troisième couche, cette troisième couche comportant des cavités remplies dudit gaz.

15. Composant selon la revendication 14, caractérisé en ce que les première et quatrième couches sont en silice, la seconde couche en $Si_3N_4$ et la troisième couche en silice dopée avec un dopant augmentant son indice de réfraction, et en ce que les cavités sont remplies d'air.

16. Procédé de fabrication d'un composant optique selon l'une quelconque des revendications 1 à 15, caractérisé en ce qu'il comprend les étapes suivantes :

- dépôt d'au moins une première couche (16, 18, 24, 50) sur l'ensemble d'un substrat (14,46),
- réalisation d'au moins une tranchée (22, 22a, 22b, 42) dans cette première couche dont le rapport hauteur/largeur est ≥0,5, et
- dépôt chimique en phase vapeur (CVD) d'une seconde couche (24, 28, 52) sur l'ensemble de la première couche ainsi gravée, formant ainsi une cavité fermée remplie d'air dans la tranchée.

17. Procédé selon la revendication 16, caractérisé en ce que la seconde couche est déposée selon la technique CVD basse pression ou assisté par un plasma.

18. Procédé selon la revendication 16 ou 17, caractérisé en ce que l'on effectue un traitement thermique des première et/ou seconde couches afin de les faire fluer.

19. Procédé de fabrication d'un composant optique selon l'une quelconque des revendications 1 à 15, caractérisé en ce qu'il comprend les étapes suivantes :

(a)- dépôt d'au moins une première couche (18, 50) sur l'ensemble d'un substrat (14, 16),
(b)- réalisation d'au moins une tranchée (22, 42) dans cette première couche,
(c)- dépôt d'un matériau temporaire (38a, 38b) dans la tranchée et au-dessus de celle-ci, que l'on peut éliminer sélectivement par rapport au substrat, à la première couche et à une seconde couche,
(d)- dépôt sur la structure obtenue en (c) de la seconde couche (52), et
(e)- élimination du matériau temporaire, formant ainsi une cavité (43) fermée remplie d'air dans la tranchée.

20. Procédé de fabrication d'un composant optique selon l'une quelconque des revendications 1 à 15, caractérisé en ce qu'il comprend les étapes suivantes :

(A)- dépôt d'une première couche (48) sur l'ensemble d un substrat (14,46),
(B)- dépôt d'une couche en matériau temporaire (38), sur l'ensemble de la première couche (48), que l'on peut graver sélectivement par rapport à cette première couche, à une seconde couche (50, 52) et au substrat,
(C)- gravure de cette couche temporaire de façon à former au moins un plot en matériau temporaire (38c),
(D)- dépôt sur la structure obtenue en (C) de la seconde couche (50, 52), et
(E)- élimination du plot en matériau temporaire, formant ainsi une cavité (45) fermée remplie d'air à l'emplacement du plot.

21. Procédé selon l'une quelconque des revendications 16 à 20, caractérisé en ce que l'on injecte dans ladite cavité un gaz autre que de l'air.

**Patentansprüche**

1. Vor Umwelteinflüssen geschützte optische Komponente, auf einem Substrat (14;46) integriert und einem Lichtleiter (16,18,24; 16,17,24; 44,48,50; 44,48,40,52) zugeordnet, ebenfalls auf demselben Substrat integriert, wobei besagte Komponente wenigstens einen geschlossenen Hohlraum (26; 26a; 26b; 26e; 26c; 26d; 26f,26g; 41; 43; 45) umfaßt, isoliert von der Umgebung, gebildet in einem Graben (22; 22a; 22b;22c; 22d,22e; 30; 42), vorgesehen in wenigstens einer Schicht (16, 18, 24, 50, 52) des besagten Lichtleiters, wobei dieser genannte Hohlraum mit einem Gas (27) gefüllt ist, das eine Brechzahl hat, die kleiner ist als die Brechzahl der besagten Schicht.

2. Optische Komponente nach Anspruch 1, dadurch gekennzeichnet, daß das Gas Luft ist.

3. Optische Komponente nach einem der Ansprüche 1 und 2, dadurch gekennzeichnet, daß der Graben ein Verhältnis Höhe/Länge ≥0,1 hat.

4. Optische Komponente nach einem der Ansprüche 1 und 2, dadurch gekennzeichnet, daß der Graben ein Verhältnis Höhe/Länge hat, das von 1 bis 5 geht.

5. Optische Komponente nach einem der Ansprüche 1 bis 4, dadurch gekennzeichnet, daß der optische Leiter eine Unterschicht (16), eine Leiterschicht (18, 17), eine Oberschicht (24) und eine Deckschicht (28) umfaßt, nacheinander auf das Substrat (14) gestapelt, wobei die Leiterschicht eine Brechzahl hat, die größer ist als die der Unter-, der Ober- und der Deckschicht, und dadurch, daß der den Hohlraum enthaltende Graben sich in wenigstens einer der Schichten Unter-, Leiter- und Oberschicht befindet.

6. Optische Komponente nach einem der Ansprüche 1 bis 5, dadurch gekennzeichnet, daß der optische Leiter eine Oberschicht (24, 50, 54) und eine Unterschichte aus Siliciumdioxid (16, 44, 50) umfaßt, angeordnet auf beiden Seiten einer Leiterschicht (17, 18, 48, 52) aus Siliciumnitrid, aus Siliciumdioxid, dotiert mit einem seine Brechzahl erhöhenden Dotierstoff, oder aus $SiO_xN_y$ mit 0<x<2 und 0<y<4/3.

7. Optische Komponente des Typs Beugungsgitter nach einem der Ansprüche 1 bis 6, dadurch gekennzeichnet, daß sie mehrere Gräben (40;42) umfaßt, parallel zueinander angeordnet und jeder mit einem Hohlraum (26c,41,43,45) versehen, gefüllt mit dem genannten Gas, wobei die verschiedenen Hohlräume die Linien des Gitters bilden.

8. Optische Komponente des Typs Beugungsgitter nach Anspruch 7, wenn dieser von den Ansprüchen 5 oder 6 abhängt, dadurch gekennzeichnet, daß die Gräben (40;42) in der Leiterschicht (18,52) oder der Oberschicht (50) vorgesehen sind.

9. Optische Komponente des Typs Spiegel nach einem der Ansprüche 5 oder 6, dadurch gekennzeichnet, daß der Graben (22b) sich von der Oberschicht (24) bis zur Unterschicht (16) des Lichtleiters erstreckt.

10. Optische Komponente des Typs Trenner nach einem der Ansprüche 5 oder 6, dadurch gekennzeichnet, daß der Graben (22) im wesentlichen in der Oberschicht (18) des Lichtleiters vorgesehen ist.

11. Optische Komponente des Typs Mikroleiter nach einem der Ansprüche 1 bis 6, dadurch gekennzeichnet, daß sie zwei Gräben (22d,22e) umfaßt, parallel angeordnet und jeder versehen mit einem ein Gas enthaltenden Hohlraum (26f,26g).

12. Optische Komponente des Typs Koppler nach einem der Ansprüche 1 bis 8, dazu bestimmt, übereinanderliegende integrierte Lichtleiter, einen ersten und einen zweiten, mit sehr unterschiedlichen Brechzahländerungen zu koppeln, dadurch gekennzeichnet, daß der erste Lichtleiter gebildet wird durch eine erste Oberschicht (50) und eine erste Unterschicht (44), angeordnet auf beiden Seiten einer ersten Leiterschicht (48) mit einer Brechzahl, die höher ist als die der ersten Ober- und Unterschichten, und eine zweite Schicht, gebildet durch eine zweite Oberschicht (54) und eine zweite Unterschicht (50), angeordnet auf beiden Seiten einer zweiten Leiterschicht (52) mit einer Brechzahl, die höher ist als die der zweiten Ober- und Unterschichten, wobei die erste Oberschicht und die zweite Unterschicht ein und dieselbe Schicht bilden, Kopplungsschicht genannt, in der mehrere Gräben (42) vorgesehen sind, von denen jeder Hohlräume (45, 43, 41) enthält, die das genannte Gas einschließen.

13. Komponente nach Anspruch 12, dadurch gekennzeichnet, daß die ersten und die zweiten Unter- und Oberschichten aus Siliciumdioxid sind, die erste Leiterschicht aus $Si_3N_4$ oder $SiP_xN_y$ ist, mit 0<x<2 und 0<y<4/3, die zweite Leiterschicht aus Siliciumdioxid ist, dotiert mit einem seine Brechzahl erhöhenden Dotierstoff, und die Hohlräume mit Luft gefüllt sind.

14. Optische Komponente des Typs Koppler nach einem der Ansprüche 1 bis 8, dazu bestimmt, übereinanderliegende integrierte Lichtleiter, einen ersten und einen zweiten mit sehr unterschiedlichen Brechzahländerungen, zu koppeln, dadurch gekennzeichnet, daß die Lichtleiter gestapelt eine erste (46), eine zweite (48), eine dritte (52) und eine vierte (54) Schicht umfassen, wobei die zweite und die dritte Schicht jeweils die Leiterschichten des ersten und des zweiten Leiters bilden und Brechzahlen aufweisen, die höher sind als die der ersten und der vierten Schicht, wobei die Brechzahl der zweiten Schicht sich außerdem unterscheidet von der der dritten Schicht und diese dritte Schicht Hohlräume enthält, die mit dem genannten Gas gefüllt sind.

15. Komponente nach Anspruch 14, dadurch gekennzeichnet, daß die erste und die vierte Schicht aus Siliciumdioxid sind, die zweite Schicht aus $Si_3N_4$ ist

und die dritte Schicht aus Siliciumdioxid, dotiert mit einem Dotierstoff, der ihre Brechzahl erhöht, und dadurch, daß die Hohlräume mit Luft gefüllt sind.

16. Herstellungsverfahren einer optischen Komponente nach einem der Ansprüche 1 bis 15, dadurch gekennzeichnet, daß es die folgenden Schritte umfaßt:

   - Abscheidung von wenigstens einer ersten Schicht (16, 18, 24, 50) auf der Gesamtheit eines Substrats (14, 46),
   - Herstellung wenigstens eines Grabens (22, 22a, 22b, 42) in dieser ersten Schicht, dessen Verhältnis Höhe/Länge ≥0,5 ist, und
   - chemische Gasphasenabscheidung (CVD) einer zweiten Schicht (24, 28, 52) auf der Gesamtheit der so geätzten ersten Schicht, die infolgedessen in dem Graben einen mit Luft gefüllten Hohlraum bildet.

17. Verfahren nach Anspruch 16, dadurch gekennzeichnet, daß die zweite Schicht mittels LPCVD- oder PECVD-Technik abgeschieden wird.

18. Verfahren nach Anspruch 16 oder 17, dadurch gekennzeichnet, daß man eine Wärmebehandlung der ersten und/oder zweiten Schicht durchführt, um sie verfließen zu lassen.

19. Herstellungsverfahren einer optischen Komponente nach einem der Ansprüche 1 bis 15, dadurch gekennzeichnet, daß es die folgenden Schritte umfaßt:

   (a)- Abscheiden von wenigstens einer ersten Schicht (18, 50) auf der Gesamtheit eines Substrats (14, 16),
   (b)- Herstellen wenigstens eines Grabens (22, 42) in dieser ersten Schicht,
   (c)- Abscheiden eines Temporärmaterials (38a, 38b) in dem Graben und über diesem, das man selektiv eliminieren kann in bezug auf das Substrat, die erste Schicht und eine zweite Schicht,
   (d)- Abscheiden der zweiten Schicht auf der in (c) erhaltenen Struktur, und
   (e)- Entfernen des Temporärmaterials, infolgedessen sich in dem Graben ein mit Luft gefüllter geschlossener Hohlraum (43) bildet.

20. Herstellungsverfahren einer optischen Komponente nach einem der Ansprüche 1 bis 15, dadurch gekennzeichnet, daß es die folgenden Schritte umfaßt:

   (A)- Abscheiden einer ersten Schicht (48) auf der Gesamtheit eines Substrats (14, 16),
   (B)- Abscheiden einer Schicht aus Temporärmaterial (38) auf der Gesamtheit der ersten Schicht (48), die man selektiv ätzen kann in bezug auf diese erste Schicht, eine zweite Schicht (50, 52) und das Substrat,
   (C)- Ätzen dieser Temporärschicht, um wenigstens ein Klötzchen aus Temporärmaterial (38c) zu bilden,
   (D)- Abscheiden der zweiten Schicht (50, 52) auf der in (C) erhaltenen Struktur, und
   (E)- Eliminieren des Klötzchens aus Temporärmaterial, infolgedessen sich in dem Graben ein mit Luft gefüllter Hohlraum (45) anstelle des Klötzchens bildet.

21. Verfahren nach einem der Ansprüche 16 bis 20, dadurch gekennzeichnet, daß man in besagten Hohlraum ein anderes Gas als Luft injiziert.

## Claims

1. Environmentally protected optical component, integrated on a substrate (14; 46) and associated with a light guide (16, 18, 24; 16, 17, 24; 44, 48, 50; 44, 48, 50, 52) also integrated on the same substrate, said component having at least one sealed cavity (26; 26a; 26b; 26e; 26c; 26d; 26f; 26g; 41; 43; 45) isolated from the environment and formed in a trench (22; 22a; 22b; 22c; 22d, 22e; 30; 42) located in at least one layer (16, 18, 24, 50, 52) of said light guide, said cavity being filled with a gas (27) having a refractive index lower than the refractive index of said layer.

2. Optical component according to claim 1, characterized in that said gas is air.

3. Optical component according to either of the claims 1 and 2, characterized in that the trench has a height to width ratio of ≥ 0.1.

4. Optical component according to any one of the claims 1 to 3, characterized in that the trench has a height to width ratio from 1 to 5.

5. Optical component according to any one of the claims 1 to 4, characterized in that the optical guide comprises a lower layer (16), a guide layer (18, 17), an upper layer (24) and a covering layer (28) successively stacked on the substrate (14), the guide layer having a refractive index higher than that of the lower, upper and covering layers and in that the trench containing the cavity is located in at least one of the lower, guide and upper layers.

6. Optical component according to any one of the claims 1 to 5, characterized in that the optical guide comprises an upper layer (24, 50, 54) and a lower silica layer (16, 44, 50) on either side of a guide layer (17, 18, 48, 52) of silicon nitride, silica doped with a doping agent increasing its refractive index or SiO$_x$N$_y$ with 0<x <2 and 0 <y<4/3.

7. Optical component of the diffraction grating type according to any one of the claims 1 to 6, characterized in that it comprises several trenches (40, 42) arranged parallel to one another and each containing a cavity (26c, 41, 43, 45) filled with the gas, the different cavities constituting the lines of the grating.

8. Optical component of the grating type according to claim 7 when the latter is dependent on claims 5 or 6, characterized in that the trenches (40, 42) are made in the guide layer (18, 52) or the upper layer (50).

9. Optical component of the mirror type according to one of the claims 5 or 6, characterized in that the trench (22b) extends from the upper layer (24) to the lower layer (16) of the light guide.

10. Optical component of the splitter type according to one of the claims 5 or 6, characterized in that the trench (22) is essentially located in the upper layer (18) of the light guide.

11. Optical component of the microguide type according to any one of the claims 1 to 6, characterized in that it comprises two trenches (22d, 22e) arranged in parallel and each containing a cavity (26, 26) filled with said gas.

12. Optical component of the coupler type according to any one of the claims 1 to 8 for coupling a first and a second integrated, superimposed light guides, with very different index variations, characterized in that the first guide consists of a first upper layer (50) and a first lower layer (44), placed on either side of a first guide layer (48) with a refractive index higher than that of the first upper and lower layers, and the second guide consists of a second upper layer (54) and a second lower layer (50) placed on either side of a second guide layer (52) having a refractive index higher than that of the second lower and upper layers, the first upper layer and the second lower layer constituting one and the same coupling layer in which are provided several trenches (42), each containing a cavity (45, 43, 41) containing said gas.

13. Component according to claim 12, characterized in that the first and second lower and upper layers are of silica, the first guide layer of Si$_3$N$_4$ or SiO$_x$N$_y$ with 0< x <2 and 0 < y <4/3, the second silica guide layer doped with a dopant increasing its refractive index and the cavities are filled with air.

14. Optical component of the coupler type according to any one of the claims 1 to 8, intended for coupling a first and a second integrated, superimposed light guides with very different index variations, characterized in that the guides have a first (46), second (48), third (42) and fourth (54) stacked layers, the second and third layers constituting the guide layers respectively of the first and second guides and having refractive indices higher than those of the first and fourth layers, the refractive index of the second layer also differing from that of the third layer, which has cavities filled with said gas.

15. Component according to claim 14, characterized in that the first and fourth layers are of silica, the second layer of Si$_3$N$_4$ and the third silica layer is doped with a dopant increasing its refractive index, and in that the cavities are filled with air.

16. Process for the production of an optical component according to any one of the claims 1 to 15, characterized in that it comprises the following stages:

- deposition of at least one first layer (16, 18, 24, 50) on the complete substrate (14, 46),
- production of at least one trench (22, 22a, 22b, 42) in said first layer, whose height to width ratio is ≥ 0.5 and
- chemical vapour deposition (CVD) of a second layer (24, 28, 52) on the complete, thus etched first layer, thus forming a sealed cavity filled with air in the trench.

17. Process according to claim 16, characterized in that the second layer is deposited by plasma assisted or low pressure CVD.

18. Process according to claim 16 or 17, characterized in that a heat treatment is performed on the first and/or second layers in order to make them flow.

19. Process for the production of an optical component according to any one of the claims 1 to 15, characterized in that it comprises the following stages:

(a) deposition of at least one first layer (18, 50) on a complete substrate (14, 16),
(b) producing at least one trench (22, 42) in said first layer,
(c) deposition of a temporary material (38a, 38b) in the trench and above the latter, which can be selectively eliminated with respect to the substrate, the first layer and the second layer,
(d) deposition on the structure obtained in (c) of the second layer (52) and
(e) elimination of the temporary material, thus forming a sealed cavity (43) filled with air in the trench.

20. Process for the production of an optical component according to any one of the claims 1 to 15, characterized in that it comprises the following stages:

(A) deposition of a first layer (48) on the complete substrate (14, 46),
(B) deposition of a temporary material layer (38) on the complete first layer (48), which can be selectively etched with respect to said first layer, a second layer (50, 52) and the substrate,
(C) etching said temporary layer in order to form a temporary material element (38c),
(D) deposition on the structure obtained in (c) of the second layer (50, 52) and
(E) elimination of the temporary material element thus forming a sealed cavity (45) filled with air at the location of the element.

21. Process according to any one of the claims 16 to 20, characterized in that into said cavity is injected a gas other than air.

FIG. 1

FIG. 2

FIG. 3A

FIG. 4

_a_

_b_

FIG. 3 B

FIG. 12

FIG. 5

FIG. 7

FIG. 8

_a_

_b_

FIG. 9

FIG. 10

FIG. 11